# FASCICULE DE BREVET EUROPEEN

(11) **EP 4 222 353 B1**
(45) Date de publication et mention de la délivrance du brevet: **03.12.2025**
(21) Numéro de dépôt: 21798752.8
(22) Date de dépôt: 01.10.2021
(51) Int. Cl.: F01D 9/04, F01D 11/00, F01D 5/14

(54) **AUBE DE TURBINE POUR TURBOMACHINE D'AÉRONEF, COMPRENANT UNE PLATEFORME POURVUE D'UN CANAL DE RÉJECTION DE FLUX PRIMAIRE VERS UNE CAVITÉ DE PURGE**
TURBINENSCHAUFEL FÜR EIN FLUGZEUGTRIEBWERK MIT EINER PLATTFORM MIT EINEM KANAL ZUR PRIMÄREN STRÖMUNGSABWEISUNG IN RICHTUNG EINES SPÜLHOHLRAUMS
TURBINE BLADE FOR AN AIRCRAFT TURBINE ENGINE, COMPRISING A PLATFORM PROVIDED WITH A CHANNEL FOR PRIMARY FLOW REJECTION TOWARDS A PURGE CAVITY

(30) Priorité: 01.10.2020 FR 2010052
(43) Date de publication de la demande: 09.08.2023
(73) Titulaire: SAFRAN AIRCRAFT ENGINES, 75015 Paris (FR)
(72) Inventeur: COUSSIROU, Jean, Charles, Marie, 77550 MOISSY-CRAMAYEL (FR); CHERKAOUI, Nour, 77550 MOISSY-CRAMAYEL (FR); GENILIER, Arnaud, Lasantha, 77550 MOISSY-CRAMAYEL (FR); OLIVE, Rémi, Philippe, Oswald, 77550 MOISSY-CRAMAYEL (FR)
(74) Mandataire: Santarelli
(86) Numéro de dépôt international: PCT/FR2021/051704
(87) Numéro de publication internationale: WO 2022/069845

(56) Documents cités:
- EP-A1- 3 508 697
- EP-A2- 2 138 727
- WO-A1-2019/239064
- DE-A1- 19 524 984

## Description

### Domaine technique

L'invention se rapporte au domaine des turbines pour turbomachine d'aéronef.

L'invention se rapporte plus spécifiquement à une aube pour distributeur ou roue mobile d'une telle turbine.

### État de la technique antérieure

Une turbine de turbomachine d'aéronef conventionnelle comprend un ou plusieurs étages constitués chacun d'un distributeur et d'une roue mobile. Le distributeur comprend des aubes fixes reliées par leur extrémité radialement externe à un carter et qui sont réparties circonférentiellement autour d'un axe central longitudinal de la turbine de manière à former une couronne statorique. La roue mobile comprend un disque et des aubes reliées au disque par leur extrémité radialement interne en étant circonférentiellement réparties autour du disque. Le distributeur d'un étage est configuré de sorte qu'un écoulement de fluide pénétrant dans cet étage, comprenant typiquement des gaz en provenance d'une chambre de combustion, soit accéléré et dévié par les aubes statoriques en direction des aubes de la roue mobile de cet étage de manière à entraîner celle-ci en rotation autour de l'axe central longitudinal.

En général, chaque aube de distributeur et de roue mobile de la turbine comprend une pale et deux plateformes qui délimitent radialement entre elles une portion circonférentielle d'un conduit primaire annulaire dans lequel s'étend la pale. Le fluide traversant la turbine s'écoule principalement dans ce conduit primaire.

Lors du fonctionnement d'une turbine conventionnelle, l'interaction du fluide avec les distributeurs et les roues mobiles produit des tourbillons au niveau des plateformes des aubes, formant des écoulements dits « secondaires ».

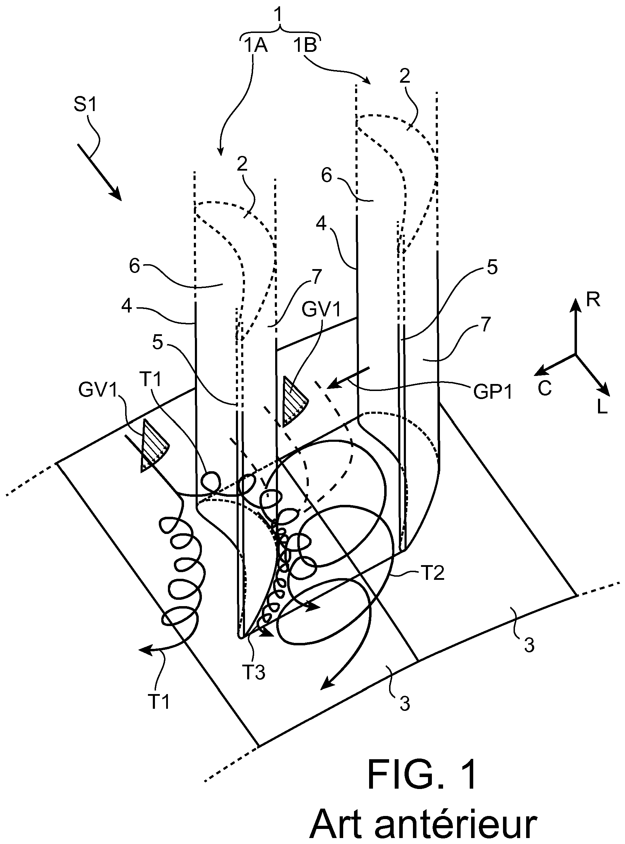

Pour illustrer ce phénomène, il est représenté sur la figure 1 une partie de deux aubes 1A et 1B d'un distributeur 1 de turbine, ces aubes 1A et 1B étant circonférentiellement adjacentes l'une par rapport à l'autre. La figure 1 montre plus particulièrement une partie radialement inférieure d'une pale 2 et une plateforme 3 de chacune des aubes 1A et 1B. La pale 2 de chaque aube 1A et 1B comprend un bord d'attaque 4, un bord de fuite 5, un intrados 6 et un extrados 7. La plateforme 3 de chaque aube 1A et 1B délimite radialement vers l'intérieur une portion circonférentielle d'un conduit primaire annulaire dans lequel s'écoule un fluide dans un sens S1 allant du bord d'attaque 4 vers le bord de fuite 5 des pales 2.

Compte tenu de la viscosité typique du fluide circulant dans le conduit primaire d'une turbine, son écoulement le long de la surface des plateformes 3 présente un gradient de vitesse GV1 tel que, dans le voisinage de cette surface, la vitesse d'une couche de fluide est d'autant plus faible que cette couche est proche de cette surface. Le fluide s'écoulant dans le conduit primaire est par ailleurs soumis à un gradient de pression GP1 orienté dans cet exemple de l'intrados 6 de la pale 2 de l'aube 1B vers l'extrados 7 de la pale 2 de l'aube 1A. Le gradient de pression GP1 est généralement suffisant pour dévier les couches de fluide s'écoulant à proximité de la surface des plateformes 3.

Il en résulte l'apparition de différents types de tourbillons. Un premier type de tourbillons T1, dits « en fer à cheval », prend la forme de deux branches contrarotatives réparties de part et d'autre des pales 2. Un deuxième type de tourbillons T2, appelés « tourbillons de passage », se développent entre deux pales 2 adjacentes. Un troisième type de tourbillons T3, appelés « tourbillons de coins », longent les lignes de raccordement entre la pale 2 et la plateforme 3 de chaque aube.

De tels écoulements secondaires T1, T2 et T3, qui se produisent typiquement en pied et en sommet des pales 2, ne sont pas orientés dans le sens S1 d'écoulement principal du fluide traversant le conduit primaire et entraînent par conséquent une réduction du rendement et une augmentation de la consommation en kérosène de la turbomachine.

Des écoulements secondaires semblables se produisent aussi dans les roues mobiles de turbine.

EP 2 138 727 A2, DE 195 24 984 A1 et WO 2019/239064 A1 divulguent des exemples des aubes pour turbine de turbomachine avec une plateforme comprenant un canal interne.

### Exposé de l'invention

L'invention vise à procurer une aube capable de limiter la formation de tels écoulements secondaires ou d'en réduire l'intensité.

A cet effet, l'invention a pour objet une aube pour turbine de turbomachine destinée à être montée autour d'un axe, comprenant une pale et au moins une plateforme, la plateforme comprenant une première surface à partir de laquelle s'étend la pale et destinée à délimiter un conduit primaire dans lequel s'étend la pale afin de recevoir un fluide s'écoulant dans un sens allant d'un bord d'attaque vers un bord de fuite de la pale et allant d'une partie amont vers une partie aval de la plateforme, la plateforme comprenant une deuxième surface radialement opposée à la première surface et destinée à délimiter une cavité de purge. Selon l'invention, la plateforme comprend au moins un canal interne présentant au moins une ouverture d'aspiration débouchant sur la première surface de la partie amont de la plateforme et au moins une ouverture d'éjection débouchant sur la deuxième surface de la partie aval de la plateforme et au moins l'une parmi la ou les ouvertures d'aspiration est positionnée en amont du bord d'attaque de la pale relativement au sens d'écoulement du fluide dans le conduit primaire

Un tel canal interne permet d'aspirer une partie du fluide s'écoulant le long de la première surface de la plateforme et d'éviter que cette partie de fluide ne contribue à la formation d'écoulements secondaires.

L'invention permet ainsi de limiter la formation d'écoulements secondaires et de réduire l'intensité des écoulements secondaires qui sont néanmoins susceptibles de se produire, améliorant ainsi le rendement et réduisant la consommation en kérosène de la turbomachine.

Le fluide circulant dans le conduit primaire et arrivant au niveau de l'au moins une ouverture d'aspiration est en effet aspiré dans l'au moins un canal interne compte tenu du différentiel de pression statique entre la région du conduit primaire environnant l'au moins une ouverture d'aspiration et la région de la cavité de purge environnant l'au moins une ouverture d'éjection.

Dans une turbine en fonctionnement, la pression statique est en effet sensiblement plus faible en aval d'une pale d'aube qu'en amont de cette pale et elle est sensiblement identique en aval de cette pale et dans la cavité de purge correspondante. Par conséquent, la pression statique est sensiblement plus faible dans la cavité de purge au niveau de l'au moins une ouverture d'éjection que dans le conduit primaire au niveau de l'au moins une ouverture d'aspiration.

L'au moins un canal interne forme ainsi un système d'aspiration passif qui ne nécessite aucun dispositif d'aspiration supplémentaire par exemple à commande mécanique ou électrique.

De plus, le fait d'éjecter le fluide acheminé par l'au moins un canal interne dans la cavité de purge plutôt que dans le conduit primaire permet d'éviter ou de réduire toute perturbation de l'écoulement principal traversant le conduit primaire.

L'invention permet ainsi de réduire la formation et/ou l'intensité des écoulements secondaires tout en évitant de générer des pertes de mélange telles que celles qui résulteraient d'une réintroduction directe, au sein du conduit primaire, du fluide ainsi aspiré.

De surcroît, la partie du fluide ainsi éjecté dans la cavité de purge contribue à l'entraînement du rotor de la turbine puisque, de manière connue en soi, la cavité de purge est fluidiquement reliée au conduit primaire.

Notamment, lorsque l'aube appartient à un distributeur de la turbine, la partie du fluide ainsi éjecté dans la cavité de purge constitue une partie du débit du fluide entraînant la roue mobile du même étage, la cavité de purge située en aval d'un distributeur étant fluidiquement reliée au conduit primaire en amont de la roue mobile du même étage.

De préférence, la partie amont de la plateforme est délimitée par une ligne fictive située à équidistance du bord d'attaque et du bord de fuite de la pale.

Selon une deuxième variante de réalisation, au moins une parmi les ouvertures d'aspiration est positionnée, relativement au sens d'écoulement du fluide dans le conduit primaire, en aval du bord d'attaque de la pale et en amont du bord de fuite de la pale.

La première et la deuxième variante peuvent être combinées.

Par exemple, selon une troisième variante de réalisation, au moins l'une des ouvertures d'aspiration est positionnée en amont du bord d'attaque de la pale relativement au sens d'écoulement du fluide dans le conduit primaire et au moins une autre desdites ouvertures d'aspiration est positionnée, relativement au sens d'écoulement du fluide dans le conduit primaire, en aval du bord d'attaque de la pale et en amont du bord de fuite de la pale.

Dans un mode de réalisation, la plateforme comprend plusieurs canaux internes fluidiquement indépendants les uns des autres.

Dans un autre mode de réalisation, la plateforme comprend plusieurs canaux internes fluidiquement reliés les uns aux autres.

La plateforme peut aussi comprendre un premier canal interne et une série d'autres canaux internes fluidiquement reliés les uns aux autres et fluidiquement indépendants du premier canal interne.

Selon une autre alternative, la plateforme peut comprendre une première série de canaux internes fluidiquement indépendants les uns des autres et une deuxième série de canaux internes fluidiquement reliés les uns aux autres et fluidiquement indépendants de la première série de canaux internes.

Dans un mode de réalisation, l'aube comprend une ou plusieurs ailettes configurées pour orienter, selon une orientation d'éjection, une fraction du fluide sortant de l'au moins un canal interne de la plateforme par la ou les ouvertures d'éjection.

Dans un mode de réalisation, l'au moins une ouverture d'aspiration est disposée du côté d'un intrados de la pale.

L'invention a aussi pour objet une turbine pour turbomachine.

Dans un mode de réalisation, la turbine comprend un distributeur comprenant au moins une aube telle que définie ci-dessus.

Dans un mode de réalisation, la turbine comprend une roue mobile comprenant au moins une aube telle que définie ci-dessus.

Bien entendu, la turbine peut comprendre un ou plusieurs distributeurs et une ou plusieurs roues mobiles comprenant chacun au moins une aube telle que définie ci-dessus.

Dans un mode de réalisation, la turbine comprend un rotor, un stator et un joint d'étanchéité dynamique, le rotor et/ou le stator comprenant au moins une aube telle que définie ci-dessus, le joint d'étanchéité dynamique comprenant une pièce d'usure solidaire du stator et au moins une léchette solidaire du rotor, la turbine étant configurée de sorte que la léchette délimite en amont ladite cavité de purge.

L'invention a aussi pour objet une turbomachine comprenant une turbine telle que définie ci-dessus.

Selon un autre aspect, l'invention a pour objet un procédé de fabrication d'une aube telle que définie ci-dessus.

De préférence, ce procédé comprend une étape de fabrication additive de cette aube.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique partielle en perspective, déjà décrite ci-dessus, d'un distributeur de turbine conventionnelle pour turbomachine d'aéronef, illustrant des écoulements secondaires qui se produisent lors du fonctionnement de la turbine ;
[Fig. 2] est une vue schématique en coupe axiale d'un ensemble propulsif d'aéronef ;
[Fig. 3] est une demi-vue schématique partielle en coupe axiale d'une turbine basse-pression de turbomachine ;
[Fig. 4] est une demi-vue schématique partielle en coupe axiale d'une turbine basse-pression de turbomachine ;
[Fig. 5] est une illustration schématique et simplifiée d'une partie d'une aube conforme à l'invention, comprenant une plateforme pourvue d'un canal interne ;
[Fig. 6] est une vue schématique partielle en perspective d'une aube conforme à l'invention, montrant des ouvertures d'aspiration selon un premier mode de réalisation ;
[Fig. 7] est une vue schématique partielle en perspective d'une aube conforme à l'invention, montrant une ouverture d'aspiration selon un deuxième mode de réalisation ;
[Fig. 8] est une vue schématique partielle en perspective d'une aube conforme à l'invention, montrant des ouvertures d'aspiration selon un troisième mode de réalisation ;
[Fig. 9] est une vue schématique partielle en perspective d'une aube conforme à l'invention, montrant une ouverture d'aspiration selon un quatrième mode de réalisation.

### Description détaillée de modes de réalisation

Les figures comprennent un référentiel L, R et C définissant respectivement des directions longitudinale (ou axiale), radiale et circonférentielle orthogonales entre elles.

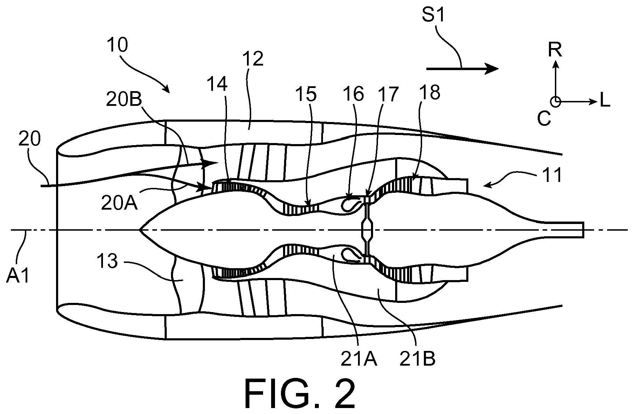

Il est représenté à la figure 2 un ensemble propulsif 10 d'aéronef comprenant une turbomachine 11 carénée par une nacelle 12. Dans cet exemple, la turbomachine 11 est un turboréacteur à double corps et à double flux.

Par la suite, les termes « amont » et « aval » sont définis par rapport à un sens S1 d'écoulement des gaz à travers l'ensemble propulsif 10 lorsque celui-ci est propulsé.

Le turboréacteur 11 présente un axe central longitudinal A1 autour duquel s'étendent ses différents composants, en l'occurrence, de l'amont vers l'aval, une soufflante 13, un compresseur basse pression 14, un compresseur haute pression 15, une chambre de combustion 16, une turbine haute pression 17 et une turbine basse pression 18. Les compresseurs 14 et 15, la chambre de combustion 16 et les turbines 17 et 18 forment un générateur de gaz.

Lors du fonctionnement du turboréacteur 11, un écoulement d'air 20 pénètre dans l'ensemble propulsif 10 par une entrée d'air en amont de la nacelle 12, traverse la soufflante 13 puis se divise en un flux primaire 20A central et un flux secondaire 20B. Le flux primaire 20A s'écoule dans un conduit primaire 21A de circulation des gaz traversant le générateur de gaz. Le flux secondaire 20B s'écoule quant à lui dans un conduit secondaire 21B entourant le générateur de gaz et délimité radialement vers l'extérieur par la nacelle 12.

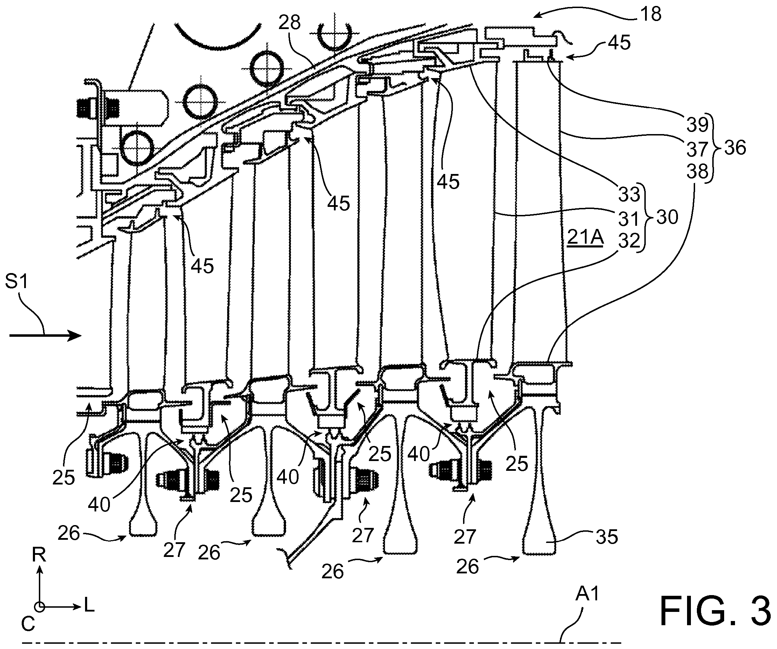

Dans un exemple de réalisation, la turbine basse pression 18 est telle que décrite ci-après en référence à la figure 3 qui montre la turbine 18 selon un plan radial qui comprend l'axe central longitudinal A1.

L'axe central longitudinal A1 est aussi l'axe de rotation du rotor de cette turbine 18.

Dans cet exemple, la turbine 18 comprend quatre étages comprenant chacun un distributeur 25 et une roue mobile 26.

De manière connue en soi, les roues mobiles 26 sont assemblées axialement les unes aux autres par des brides annulaires 27 et forment le rotor de la turbine 18. Les distributeurs 25 sont quant à eux reliés à un carter 28 pour former le stator de la turbine 18.

Chaque distributeur 25 comprend une pluralité d'aubes 30 circonférentiellement réparties autour de l'axe A1. En référence au distributeur 25 du dernier étage de la turbine 18 dont une seule aube 30 est représentée sur la figure 3, les aubes 30 comprennent chacune une pale 31, une plateforme interne 32 et une plateforme externe 33. Les aubes 30 sont chacune reliées au carter 28 par un élément d'accroche solidaire de leur plateforme externe 33.

Chaque roue mobile 26 comprend un disque 35 et une pluralité d'aubes 36 circonférentiellement réparties autour de l'axe A1. En référence à la roue mobile 26 du dernier étage de la turbine 18 dont une seule aube 36 est représentée sur la figure 3, les aubes 36 comprennent chacune une pale 37, une plateforme interne 38 et une plateforme externe 39. Les aubes 36 sont chacune reliées au disque 35 par un pied solidaire de leur plateforme interne 38.

Pour chaque aube 30 de distributeur 25, les plateformes 32 et 33 comprennent chacune une première surface à partir de laquelle s'étend la pale 31 et qui délimite une portion circonférentielle du conduit primaire 21A dans lequel circule le flux primaire 20A. Ainsi, la première surface de la plateforme interne 32 de chaque aube 30 délimite le conduit primaire 21A radialement vers l'intérieur tandis que la première surface de la plateforme externe 33 de chaque aube 30 délimite le conduit primaire 21A radialement vers l'extérieur.

De même, pour chaque aube 36 de roue mobile 26, les plateformes 38 et 39 comprennent chacune une première surface à partir de laquelle s'étend la pale 37 et qui délimite une portion circonférentielle du conduit primaire 21A. Ainsi, la première surface de la plateforme interne 38 de chaque aube 36 délimite le conduit primaire 21A radialement vers l'intérieur tandis que la première surface de la plateforme externe 39 de chaque aube 36 délimite le conduit primaire 21A radialement vers l'extérieur.

Dans la turbine 18 de la figure 3, le conduit primaire 21A est par conséquent globalement annulaire.

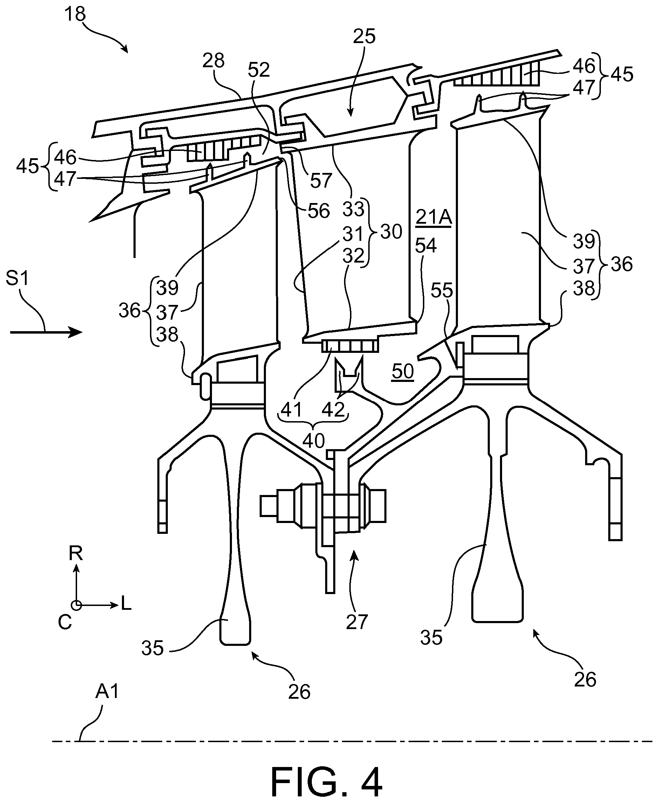

Dans un autre exemple de réalisation, la turbine basse pression 18 est telle que décrite ci-après en référence à la figure 4.

La figure 4 montre une partie de turbine 18 du même type que celle de la figure 3, centrée sur un distributeur 25, une roue mobile 26 appartenant au même étage que ce distributeur 25 (à droite sur la figure 4) et une roue mobile 26 d'un étage inférieure (à gauche sur la figure 4).

Dans l'exemple de la figure 4, la turbine 18 comprend un joint d'étanchéité dynamique 40 comprenant d'une part une pièce d'usure 41 abradable solidaire de la plateforme interne 32 des aubes 30 du distributeur 25 et, d'autre part, des léchettes 42 solidaires des roues mobiles 26. Le joint 40 permet de limiter la circulation de gaz radialement en-dessous du distributeur 25.

La turbine 18 de la figure 4 comprend aussi des joints d'étanchéité dynamique 45, chacun comprenant d'une part une pièce d'usure 46 abradable solidaire du carter 28 et, d'autre part, des léchettes 47 solidaires de la plateforme externe 39 des aubes 36 des roues mobiles 26. Les joints 45 permettent de limiter la circulation de gaz radialement au-dessus des roues mobiles 26.

La turbine 18 de la figure 3 comprend aussi des joints d'étanchéité dynamique 40 et 45 du même type pour limiter la circulation de gaz respectivement radialement en-dessous des distributeurs 25 et radialement au-dessus des roues mobiles 26.

De tels joints d'étanchéité dynamique 40 et 45 limitent ainsi mais n'empêchent pas totalement toute circulation de gaz en-dehors du conduit primaire 21A compte tenu notamment des jeux qui résultent de la dilatation thermique et du mouvement relatif des différentes pièces fixes et mobiles de la turbine 18.

En référence à la figure 4, les espaces radialement en-dehors du conduit primaire 21A définissent différentes cavités annulaires incluant des cavités 50 et 52 ici appelées « cavités de purge ».

Dans cet exemple, la cavité de purge 50 est délimitée radialement vers l'extérieur par une deuxième surface de la plateforme interne 32 des aubes 30 du distributeur 25 et axialement en amont par le joint d'étanchéité dynamique 40. Pour chaque aube 30, la deuxième surface de la plateforme interne 32 est dans cet exemple radialement opposée à la première surface de cette plateforme interne 32. Ainsi, la deuxième surface de la plateforme interne 32 de chaque aube 30 délimite une portion circonférentielle de la cavité de purge 50.

La cavité de purge 50 est fluidiquement reliée au conduit primaire 21A par une ouverture annulaire s'étendant axialement et/ou radialement entre une extrémité aval 54 de la plateforme interne 32 des aubes 30 du distributeur 25 et une extrémité amont 55 de la plateforme interne 38 des aubes 36 de la roue mobile 26 appartenant au même étage que le distributeur 25.

Dans l'exemple de la figure 4, la cavité de purge 52 est délimitée radialement vers l'intérieur par une deuxième surface de la plateforme externe 39 des aubes 36 de la roue mobile 26 appartenant à l'étage inférieur à celui du distributeur 25. La cavité de purge 52 est délimitée axialement en amont par le joint d'étanchéité dynamique 45 dont les léchettes 47 sont solidaires de cette roue mobile 26. Pour chaque aube 36, la deuxième surface de la plateforme externe 39 est dans cet exemple radialement opposée à la première surface de cette plateforme externe 39. Ainsi, la deuxième surface de la plateforme externe 39 de chaque aube 36 délimite une portion circonférentielle de la cavité de purge 52.

La cavité de purge 52 est fluidiquement reliée au conduit primaire 21A par une ouverture annulaire s'étendant axialement et/ou radialement entre une extrémité aval 56 de la plateforme externe 39 des aubes 36 de la roue mobile 26 précitée et une extrémité amont 57 de la plateforme externe 33 des aubes 30 du distributeur 25.

Dans les exemples des figures 3 et 4, la turbine 18 comprend une telle cavité de purge 50 ou 52 en aval de chaque joint d'étanchéité dynamique 40 ou 45, respectivement.

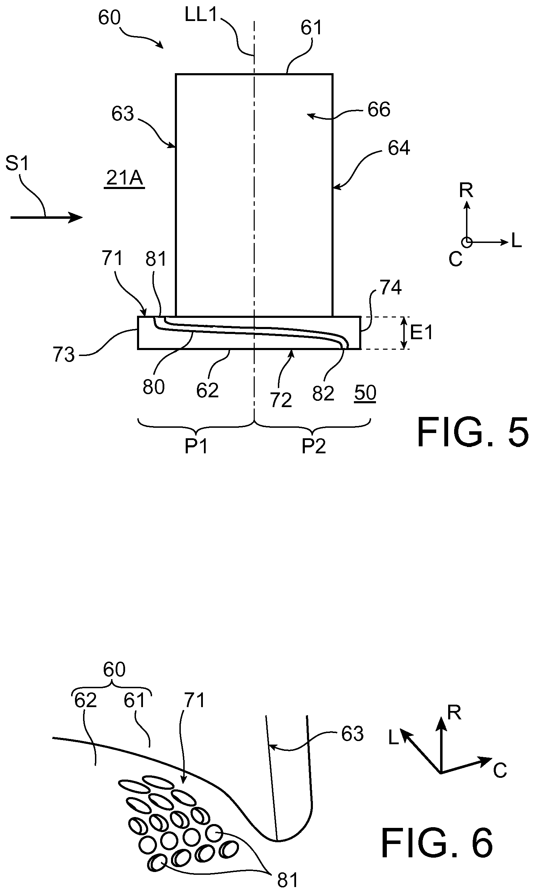

La figure 5 montre une partie d'une aube 60 conforme à l'invention.

L'aube 60 comprend une pale 61 et une plateforme 62.

Dans cet exemple nullement limitatif, l'aube 60 correspond à l'une des aubes 30 de l'un des distributeurs 25 de la turbine 18 de la figure 3 ou 4 de sorte que la plateforme 62 de l'aube 60 corresponde à la plateforme interne 32 de cette aube 30.

La pale 61 de l'aube 60 comprend un bord d'attaque 63, un bord de fuite 64, un intrados (non visible) et un extrados 66.

La plateforme 62 de l'aube 60 comprend une première surface 71 et une deuxième surface 72 radialement opposées l'une par rapport à l'autre et définissant une épaisseur E1 de la plateforme 62.

La plateforme 62 comprend une extrémité amont 73 et une extrémité aval 74.

Dans la représentation schématique et simplifiée de la figure 5, la première surface 71 et la deuxième surface 72 sont planes et parallèles l'une à l'autre. Bien entendu, chacune de ces surfaces peut présenter une géométrie non plane et être globalement orientée selon une direction oblique par rapport aux directions longitudinale L et radiale R, telle la plateforme 32 de l'aube 30 de la figure 4. Dans un tel cas, les première et deuxième surface 71 et 72 définissent plus généralement une épaisseur E1 de la plateforme 62 au moins au niveau de l'extrémité amont 73 et/ou de l'extrémité aval 74.

Il est représenté sur la figure 5 une ligne fictive LL1 située à équidistance du bord d'attaque 63 et du bord de fuite 64 de la pale 61 de l'aube 60.

Dans la représentation schématique et simplifiée de la figure 5, le bord d'attaque 63 et le bord de fuite 64 sont rectilignes et parallèles l'un à l'autre. Bien entendu, chacun de ces bords peut présenter une géométrie non rectiligne et être globalement orienté selon une direction oblique par rapport à la direction radiale R, telle le bord d'attaque de la pale 31 de l'aube 30 de la figure 4. De manière générale, la ligne fictive LL1 n'est donc pas nécessairement droite.

La ligne fictive LL1 délimite une partie amont P1 et une partie aval P2 de la plateforme 62.

Lorsque l'aube 60 équipe l'un des distributeurs 25 de la turbine 18 de la figure 3 ou 4, la première surface 71 de la plateforme 62 délimite radialement vers l'intérieur le conduit primaire 21A et le sens S1 d'écoulement du flux primaire 20A est dirigé du bord d'attaque 63 vers le bord de fuite 64 de la pale 61 et de la partie amont P1 vers la partie aval P2 de la plateforme 62. Dans ces conditions, la deuxième surface 72 de la plateforme 62 délimite radialement vers l'extérieur la cavité de purge 50 correspondante (voir ci-dessus).

La plateforme 62 comprend un canal interne 80 présentant une ouverture d'aspiration 81 qui débouche sur la première surface 71 de la partie amont P1 de la plateforme 62 et une ouverture d'éjection 82 qui débouche sur la deuxième surface 72 de la partie aval P2 de la plateforme 62.

Dans cet exemple, l'ouverture d'aspiration 81 du canal interne 80 débouche plus précisément en amont du bord d'attaque 63 de la pale 61.

L'invention couvre toute géométrie du canal interne 80 et des ouvertures d'aspiration 81 et d'éjection 82 pourvu que le canal interne 80 permette de prélever une partie du flux primaire 20A dans le conduit primaire 21A et l'éjecter dans la cavité de purge 50 sous l'effet du différentiel de pression statique entre ce conduit primaire 21A et cette cavité de purge 50.

L'invention n'est donc aucunement limitée aux exemples illustrés sur les figures.

Par exemple, dans des modes de réalisation non représentés, la plateforme 62 comprend un ou plusieurs autres canaux internes fluidiquement indépendants du canal interne 80 ou fluidiquement reliés à ce canal interne 80.

Indépendamment du nombre et de la géométrie des canaux internes 80, ceux-ci peuvent comprendre une ou plusieurs ouvertures d'aspiration 81 et une ou plusieurs ouvertures d'éjection 82.

Les figures 6 à 9 illustrent différents types d'ouvertures d'aspiration 81 qui débouchent toutes, dans ces exemples, sur la première surface 71 de la plateforme 62 en aval, à proximité axiale du bord d'attaque 63 de la pale 61.

Dans l'exemple de la figure 6, la plateforme 62 comprend un canal interne 80 présentant dix-sept ouvertures d'aspiration 81 de section circulaire obtenues par exemple par perçage ou fabrication additive.

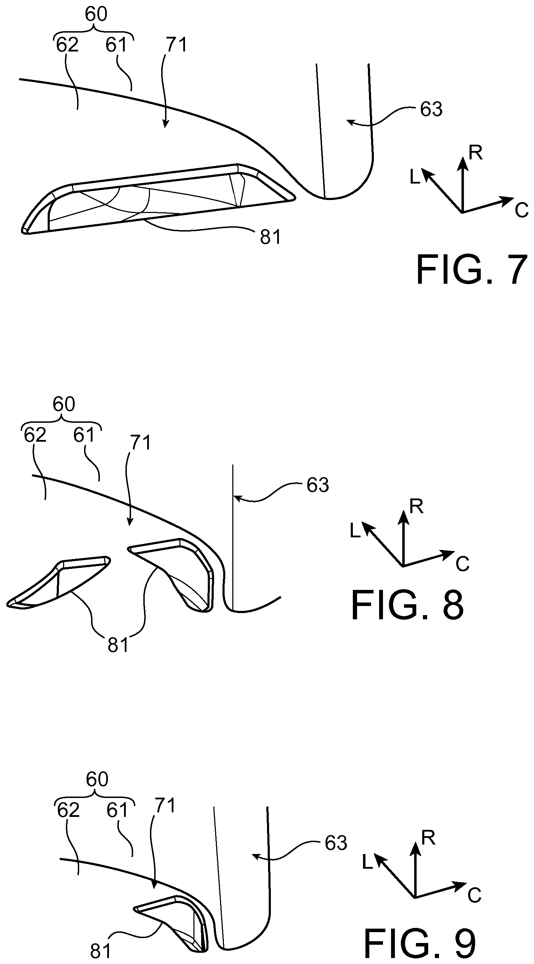

Dans l'exemple de la figure 7, la plateforme 62 comprend un canal interne 80 présentant une unique ouverture d'aspiration 81 sous forme d'une rainure s'étendant dans la direction circonférentielle C.

Dans l'exemple de la figure 8, la plateforme 62 comprend un canal interne 80 présentant deux ouvertures d'aspiration 81 sous forme de rainures s'étendant selon une direction courbe de manière à longer l'intrados de la pale 61.

Dans l'exemple de la figure 9, la plateforme 62 comprend un canal interne 80 présentant une unique ouverture d'aspiration 81 correspondant à l'une des rainures de la figure 8.

Dans un mode de réalisation non représenté, l'aube 60 de la figure 5 comprend des ailettes configurées pour orienter, selon une orientation d'éjection, le fluide sortant du canal interne 80 par l'ouverture d'éjection 82.

Ce qui vient d'être décrit s'applique par analogie aux aubes 36 de roue mobile 26 de la turbine 18. Ainsi, dans un mode de réalisation, chacune des aubes 36 des roues mobiles 26 de la turbine 18 comprend une pale telle la pale 61 de l'aube 60 de la figure 5 et une plateforme externe telle la plateforme 62 de l'aube 60 de la figure 5, de sorte que l'au moins un canal interne 80 soit configuré pour prélever une partie du flux primaire 20A dans le conduit primaire 21A et l'éjecter dans la cavité de purge 52 correspondante.

Dans un autre mode de réalisation, les aubes 30 d'au moins un distributeur 25 de la turbine 18 comprennent une plateforme interne et une plateforme externe toutes deux similaires à la plateforme 62 de l'aube 60 de la figure 5. De la même manière, les aubes 36 d'au moins une roue mobile 26 de la turbine 18 peuvent comprendre une plateforme interne et une plateforme externe toutes deux similaires à la plateforme 62 de l'aube 60 de la figure 5.

Dans un autre mode de réalisation, un ou plusieurs distributeurs 25 et/ou une ou plusieurs roues mobiles 26 de la turbine 18 peuvent comprendre une alternance d'aubes conventionnelles et d'aubes comprenant au moins une plateforme telle la plateforme 62 de l'aube 60 de la figure 5.

L'invention peut aussi être mise en œuvre dans la turbine haute pression 17 et dans une turbine d'une turbomachine différente du turboréacteur 11 de la figure 2.

## Revendications

1. Aube (60) pour turbine (18) de turbomachine (11) destinée à être montée autour d'un axe (A1), comprenant une pale (61) et une plateforme (62), la pale (61) s'étendant selon une direction radiale par rapport audit axe (A1) à partir de la plateforme (62), la plateforme (62) comprenant une première surface (71) à partir de laquelle s'étend la pale (61) et destinée à délimiter un conduit primaire (21A) dans lequel s'étend la pale (61) afin de recevoir un fluide s'écoulant dans un sens (S1) allant d'un bord d'attaque (63) vers un bord de fuite (64) de la pale (61), la plateforme (62) comprenant une partie amont (P1) selon ledit sens (S1) et une partie aval (P2) selon ledit sens (S1), qui sont délimitées par une ligne fictive (LL1) d'orientation principale radiale située à équidistance du bord d'attaque (63) et du bord de fuite (64) de la pale (61), la plateforme (62) comprenant une deuxième surface (72) radialement opposée à la première surface (71) et destinée à délimiter une cavité de purge (50),
dans laquelle la plateforme (62) comprend au moins un canal interne (80) présentant au moins une ouverture d'aspiration (81) débouchant sur la première surface (71) au niveau de la partie amont (P1) de la plateforme (62) et au moins une ouverture d'éjection (82) débouchant sur la deuxième surface (72) au niveau de la partie aval (P2) de la plateforme (62),
**caractérisée en ce que** au moins l'une parmi la ou les ouvertures d'aspiration (81) est positionnée en amont du bord d'attaque (63) de la pale (61) relativement au sens (S1) d'écoulement du fluide dans le conduit primaire (21A).

2. Aube (60) selon la revendication 1, dans laquelle : au moins une parmi les ouvertures d'aspiration (81) est positionnée, relativement au sens (S1) d'écoulement du fluide dans le conduit primaire (21A), en aval du bord d'attaque (63) de la pale (61) et en amont du bord de fuite (64) de la pale (61).

3. Aube (60) selon l'une quelconque des revendications 1 ou 2, dans laquelle la plateforme (62) comprend plusieurs canaux internes fluidiquement indépendants les uns des autres et/ou plusieurs canaux internes fluidiquement reliés les uns aux autres.

4. Aube (60) selon l'une quelconque des revendications 1 à 3, comprenant une ou plusieurs ailettes configurées pour orienter, selon une orientation d'éjection, une fraction du fluide sortant de l'au moins un canal interne (80) de la plateforme (62) par la ou les ouvertures d'éjection (82).

5. Aube (60) selon l'une quelconque des revendications 1 à 4, dans laquelle l'au moins une ouverture d'aspiration (81) est disposée du côté d'un intrados de la pale (61).

6. Turbine (18) pour turbomachine (11), comprenant un distributeur (25) comprenant au moins une aube (60) selon l'une quelconque des revendications 1 à 5et/ou comprenant une roue mobile (26) comprenant au moins une aube (60) selon l'une quelconque des revendications 1 à 5.

7. Turbine (18) pour turbomachine (11), comprenant un rotor, un stator et un joint d'étanchéité dynamique (40), le rotor et/ou le stator comprenant au moins une aube (60) selon l'une quelconque des revendications 1 à 5, le joint d'étanchéité dynamique (40) comprenant une pièce d'usure (41) solidaire du stator et au moins une léchette (42) solidaire du rotor, la turbine (18) étant configurée de sorte que la léchette (42) délimite en amont ladite cavité de purge (50).

8. Turbomachine (11) comprenant une turbine (18) selon la revendication 6 ou 7.

9. Procédé de fabrication d'une aube (60) selon l'une quelconque des revendications 1 à 5, comprenant une étape de fabrication additive de cette aube (60).

## Patentansprüche

1. Schaufel (60) für die Turbine (18) einer Turbomaschine (11), die dazu bestimmt ist, um eine Achse (A1) montiert zu sein, umfassend ein Blatt (61) und eine Plattform (62), wobei sich das Blatt (61) in einer radialen Richtung in Bezug auf die Achse (A1) von der Plattform (62) aus erstreckt, wobei die Plattform (62) eine erste Oberfläche (71) umfasst, von der aus sich das Blatt (61) erstreckt, und die dazu bestimmt ist, einen Primärkanal (21A) zu begrenzen, in dem sich das Blatt (61) erstreckt, um ein in eine Richtung (S1) von einer Vorderkante (63) zu einer Hinterkante (64) des Blatts (61) fließendes Fluid aufzunehmen, wobei die Plattform (62) einen stromaufwärts gerichteten Teil (P1) in dieser Richtung (S1) und einen stromabwärts gerichteten Teil (P2) in dieser Richtung (S1) umfasst, die durch eine fiktive radiale Hauptausrichtungslinie (LL1) begrenzt sind, die sich im gleichen Abstand von der Vorderkante (63) und der Hinterkante (64) des Blatts (61) befindet, wobei die Plattform (62) eine zweite Fläche (72) umfasst, die radial der ersten Fläche (71) gegenübersteht und zur Begrenzung eines Entlüftungshohlraums (50) bestimmt ist,
wobei die Plattform (62) mindestens einen inneren Kanal (80) umfasst, der mindestens eine Ansaugöffnung (81), die auf der ersten Oberfläche (71) an dem vorgelagerten Teil (P1) der Plattform (62) mündet, und mindestens eine Auswurföffnung (82) aufweist, die auf der zweiten Oberfläche (72) an dem nachgelagerten Teil (P2) der Plattform (62) mündet,
**dadurch gekennzeichnet, dass** mindestens eine der Ansaugöffnung(en) (81) gegenüber der Vorderkante (63) des Blatts (61) relativ zur Strömungsrichtung (S1) des Fluids in der Primärleitung (21A) positioniert ist.

2. Schaufel (60) nach Anspruch 1, wobei: mindestens eine der Ansaugöffnungen (81) relativ zu der Strömungsrichtung (S1) des Fluids in dem Primärkanal (21A) hinter der Vorderkante (63) des Blatts (61) und vor der Hinterkante (64) des Blatts (61) positioniert ist.

3. Schaufel (60) nach einem der Ansprüche 1 oder 2, wobei die Plattform (62) mehrere voneinander fluidisch unabhängige innere Kanäle und/oder mehrere miteinander fluidisch verbundene innere Kanäle umfasst.

4. Schaufel (60) nach einem der Ansprüche 1 bis 3, umfassend einen oder mehrere Flügel, die so eingerichtet sind, dass sie in einer Auswurfrichtung einen Bruchteil des aus dem mindestens einen inneren Kanal (80) der Plattform (62) austretenden Fluids durch die Auswurföffnung(en) (82) leiten.

5. Schaufel (60) nach einem der Ansprüche 1 bis 4, wobei die mindestens eine Ansaugöffnung (81) an einer Rückseite des Blatts (61) angeordnet ist.

6. Turbine (18) für eine Turbomaschine (11), umfassend einen Verteiler (25), der mindestens eine Schaufel (60) nach einem der Ansprüche 1 bis 5 umfasst und/oder ein bewegliches Rad (26) umfasst, das mindestens eine Schaufel (60) nach einem der Ansprüche 1 bis 5 umfasst.

7. Turbine (18) für eine Turbomaschine (11), umfassend einen Rotor, einen Stator und eine dynamische Dichtung (40), wobei der Rotor und/oder der Stator mindestens eine Schaufel (60) nach einem der Ansprüche 1 bis 5 umfasst, wobei die dynamische Dichtung (40) ein Verschleißteil (41) umfasst, das fest mit dem Stator verbunden ist, und mindestens eine Lasche (42), die fest mit dem Rotor verbunden ist, wobei die Turbine (18) so eingerichtet ist, dass die Lasche (42) stromaufwärts den Entlüftungshohlraum (50) begrenzt.

8. Turbomaschine (11), umfassend eine Turbine (18) nach Anspruch 6 oder 7.

9. Verfahren zur Herstellung einer Schaufel (60) nach einem der Ansprüche 1 bis 5, umfassend einen Schritt der additiven Herstellung dieser Schaufel (60).

## Claims

1. Blade (60) for a turbine (18) of a turbine engine (11) intended to be mounted about an axis (A1), comprising an aerofoil (61) and a platform (62), the aerofoil (61) extending in a radial direction relative to said axis (A1) from the platform (62), the platform (62) comprising a first surface (71) from which the aerofoil (61) extends and intended to delimit a primary duct (21A) into which the aerofoil (61) extends in order to receive a fluid flowing in a direction (S1) from a leading edge (63) to a trailing edge (64) of the aerofoil (61), the platform (62) comprising an upstream part (P1) in said direction (S1) and a downstream part (P2) in said direction (S1), which are delimited by an imaginary line (LL1) oriented mainly radially and equidistant from the leading edge (63) and from the trailing edge (64) of the aerofoil (61), the platform (62) comprising a second surface (72) radially opposite the first surface (71) and intended to delimit a purge cavity (50),
wherein the platform (62) comprises at least one internal channel (80) having at least one suction opening (81) that opens out onto the first surface (71) at the upstream part (P1) of the platform (62) and at least one ejection opening (82) that opens out onto the second surface (72) at the downstream part (P2) of the platform (62),
**characterised in that** at least one of the one or more suction openings (81) is positioned upstream of the leading edge (63) of the aerofoil (61) relative to the direction (S1) of fluid flow within the primary duct (21A).

2. Blade (60) according to claim 1, wherein at least one among the suction openings (81) is positioned, relative to the direction (S1) of fluid flow within the primary duct (21A), downstream of the leading edge (63) of the aerofoil (61) and upstream of the trailing edge (64) of the aerofoil (61).

3. Blade (60) according to any one of claims 1 or 2, wherein the platform (62) comprises a plurality of internal channels fluidly independent of one another and/or a plurality of internal channels fluidly connected to one another.

4. Blade (60) according to any one of claims 1 to 3, comprising one or more vanes configured to orient, in an ejection orientation, a fraction of the fluid exiting the at least one internal channel (80) of the platform (62) through the one or more ejection openings (82).

5. Blade (60) according to any one of claims 1 to 4, wherein the at least one suction opening (81) is disposed on the side of a pressure face of the aerofoil (61).

6. Turbine (18) for a turbine engine (11), comprising a nozzle (25) comprising at least one blade (60) according to any one of claims 1 to 5 and/or comprising a rotor wheel (26) comprising at least one blade (60) according to any one of claims 1 to 5.

7. Turbine (18) for a turbine engine (11), comprising a rotor, a stator and a dynamic seal (40), the rotor and/or stator comprising at least one blade (60) according to any one of claims 1 to 5, the dynamic seal (40) comprising a wear part (41) integral with the stator and at least one knife edge (42) integral with the rotor, the turbine (18) being configured such that the knife edge (42) delimits upstream said purge cavity (50).

8. Turbine engine (11) comprising a turbine (18) according to claim 6 or 7.

9. Method for manufacturing a blade (60) according to any one of claims 1 to 5, comprising a step of additive manufacturing this blade (60).
